(19) Europäisches Patentamt
European Patent Office
Office européen des brevets

(11) **EP 4 700 609 A1**

(12) **DEMANDE DE BREVET EUROPEEN**

(43) Date de publication:
**25.02.2026 Bulletin 2026/09**

(21) Numéro de dépôt: **25196573.7**

(22) Date de dépôt: **19.08.2025**

(51) Classification Internationale des Brevets (IPC):
***G06F 17/18*** *(2006.01)*

(52) Classification Coopérative des Brevets (CPC):
**G06F 17/18**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **20.08.2024 FR 2409010**

(71) Demandeur: **Commissariat à l'Energie Atomique et aux Energies Alternatives**
**75015 Paris (FR)**

(72) Inventeur: **VASSILEV, Andréa**
**38054 GRENOBLE CEDEX 09 (FR)**

(74) Mandataire: **INNOV-GROUP**
**209 Avenue Berthelot**
**69007 Lyon (FR)**

(54) **PROCÉDÉ DE COMPARAISON DE DEUX SIGNAUX TEMPORELS**

(57) Procédé de comparaison d'un premier signal temporel (x) et d'un deuxième signal temporel (y), comportant une détermination d'un nombre de passages par zéro de chaque signal, et éventuellement de signaux différentiels formés pour chaque signal. A partir de chaque nombre de passages par zéro, on détermine des indices fréquentiels, ainsi que des puissances spectrales correspondant à chaque indice fréquentiel. On constitue ensuite un indice de comparaison, basé sur une comparaison de chaque nombre de passages par zéro normalisé, ainsi que de chaque puissance spectrale.

Fig. 1

**Fig. 3C**

**Description**

**DOMAINE TECHNIQUE**

Le domaine technique de l'invention est le traitement du signal, et plus précisément la comparaison de deux signaux temporels

**ART ANTERIEUR**

La comparaison de signaux temporels consiste à analyser deux ou plusieurs signaux temporels pour identifier leurs similitudes et leurs différences. Un des objectifs recherchés peut notamment être une comparaison d'un signal mesuré à un signal de référence. Les applications peuvent concerner différents domaines, par exemple la médecine (comparaison de signaux biomédicaux pour l'aide au diagnostic ou le suivi de patients), l'acoustique (comparaison de signaux audio), les télécommunications (analyse de la qualité ou de la fiabilité de signaux), ou la détection d'anomalies.

Différentes méthodes peuvent être mises en œuvre, variant en complexité, allant à de simples comparaisons visuelles à des analyses avancées, par exemple dans le domaine spectral.

La publication Kediem B. « Spectral analysis and discrimination by zero crossings », Proceedings of the IEEE, vol. 74, n° 11, 1986-11-01, décrit une méthode frugale basée sur le nombre de passages par zéro d'un signal temporel. Une telle méthode permet de comparer deux signaux temporels avec un coût calculatoire faible. Cette méthode a été appliquée à la détection d'anomalies dans des signaux magnétiques dans la publication Sheinker « Magnetic anomaly detection using high-order crossing method », IEEE transactions on geoscience and remote sensing, Vol. 50, N°4, April 2012.

La détection de passages par zero a été appliquée à des signaux d'électromyogrammes, à des fins de reconnaissance de mouvement, dans la publication Toledo Peres « A study of computing zero crossing methods and an improved proposal for EMG signals ».

Le document Shenoy Ravi R. et al "Spectral Zero Crossings : Localization Properties and Applications, IEEE Transactions on signal processing, vol. 3, n°12, 2014-06-01, vise à détecter le nombre de passages par zéro pour positionner précisément la survenue de transitoires dans un signal stable, en particulier à des fins de reconnaissance vocale.

L'invention décrite par la suite est un perfectionnement des méthodes de type « zero crossing methods » mises en œuvre dans les publications précitées. Elle améliore les performances de discrimination entre deux signaux, tout en pouvant être implémentée avec un coût calculatoire réduit.

**EXPOSE DE L'INVENTION**

Un premier objet de l'invention est un procédé de comparaison d'un premier signal temporel et d'un deuxième signal temporel, le premier signal temporel et le deuxième signal temporel étant centrés et respectivement formés d'un premier nombre et d'un deuxième nombre d'échantillons consécutifs, chaque échantillon étant associé à un instant;

le procédé comportant les étapes itératives suivantes, chaque étape étant associée à un rang $k$, $k$ étant un entier supérieur ou égal à 1 :

- a) détermination d'un premier nombre de passages par zéro d'un premier signal d'itération et d'un deuxième nombre de passages par zéro d'un deuxième signal d'itération, le premier signal d'itération et le deuxième signal d'itération étant respectivement:

  • lors de la première itération, le premier signal temporel et le deuxième signal temporel ;
  • lors de chaque itération de rang supérieur à 1, un premier signal différentiel et un deuxième signal différentiel résultant de l'itération précédente ;

- b) normalisation du premier nombre de passages par zéro et du deuxième nombre de passages par zéro résultant de l'étape a) en fonction du premier nombre d'échantillons, et du deuxième nombre d'échantillons;
- c) tant qu'un critère d'arrêt des itérations n'a pas été atteint, calcul d'un premier signal différentiel et d'un deuxième signal différentiel en calculant respectivement une différence du premier signal d'itération et du deuxième signal d'itération en différents couples d'instants successifs, puis réitération des étapes a) et b) ;

le procédé comportant également :

- d) détermination d'un premier indice fréquentiel et d'un deuxième indice fréquentiel, pour au moins un même rang d'itération, ou pour chaque rang d'itération, en fonction des premier et deuxième nombres de passages par zéro normalisés lors de l'étape b) ;

le procédé étant caractérisé en ce qu'il comporte :

- e) calcul d'au moins une première et une deuxième puissance spectrale respectivement du premier signal temporel et du deuxième signal temporel en chaque premier et deuxième indice fréquentiel résultant de l'étape d);
- f) calcul d'un indicateur de comparaison, combinant :

  • une composante fréquentielle, comportant une comparaison d'au moins un premier indice fréquentiel et d'un deuxième indice fréquentiel déterminés pour un même rang d'itération ;
  • une composante de puissance, comportant une comparaison d'au moins une puissance spectrale calculée respectivement pour le premier signal temporel et pour le deuxième signal temporel, en au moins un premier indice fréquentiel et un deuxième indice fréquentiel déterminés pour un même rang d'itération.

Selon une possibilité, l'étape e) comporte :

- e-i) calcul de premiers et deuxièmes coefficients de Fourier respectivement du premier signal temporel et du deuxième signal temporel en au moins un premier et deuxième indice fréquentiel, déterminé pour un même rang d'itération , ou pour chaque rang d'itération ;
- e-ii) détermination de la puissance spectrale, respectivement du premier signal temporel et du deuxième signal temporel auxdits premier et deuxième indice fréquentiel, à partir des premiers et deuxièmes coefficients de Fourier déterminés lors de e-i) ;

les étapes a) à f) étant mises en œuvre par une unité de traitement.
Dans l'étape c), les instants successifs sont de préférence consécutifs. Selon une autre possibilité, ils peuvent être décalés de plusieurs incréments temporels, mais de préférence d'un faible nombre d'incréments temporels.
Le critère d'arrêt des itérations peut être un nombre d'itérations prédéterminé. Selon une possibilité, il n'y a qu'une seule itération. Dans ce cas, les étapes a) et b) ne sont effectués qu'une seule fois pour chaque signal. Le nombre d'itérations peut être compris entre 1 et 5. L'indicateur de comparaison peut comporter une somme pondérée de la composante fréquentielle et de la composante de puissance. La composante fréquentielle et/ou la composante de puissance peuvent alors être affectées d'un facteur de pondération.
Selon une possibilité :

- le premier signal est un signal de référence ;
- le deuxième signal est un signal résultant d'une mesure.

Le procédé peut comporter une étape g) de comparaison de l'indicateur de comparaison avec un seuil, de façon qu'en fonction de la comparaison, le premier signal temporel est considéré comme similaire au deuxième signal temporel.
Un deuxième objet de l'invention est un support, configuré pour être lu par une unité de traitement, et comportant des instructions permettant un mise en œuvre des étapes a) à f) d'un procédé selon le premier objet de l'invention.
L'invention sera mieux comprise à la lecture de l'exposé des exemples de réalisation présentés, dans la suite de la description, en lien avec les figures listées ci-dessous.

**FIGURES**

La figure 1 décrit les principales étapes de la méthode.
Les figures 2A à 2C montrent un premier exemple de mise en œuvre de l'invention.

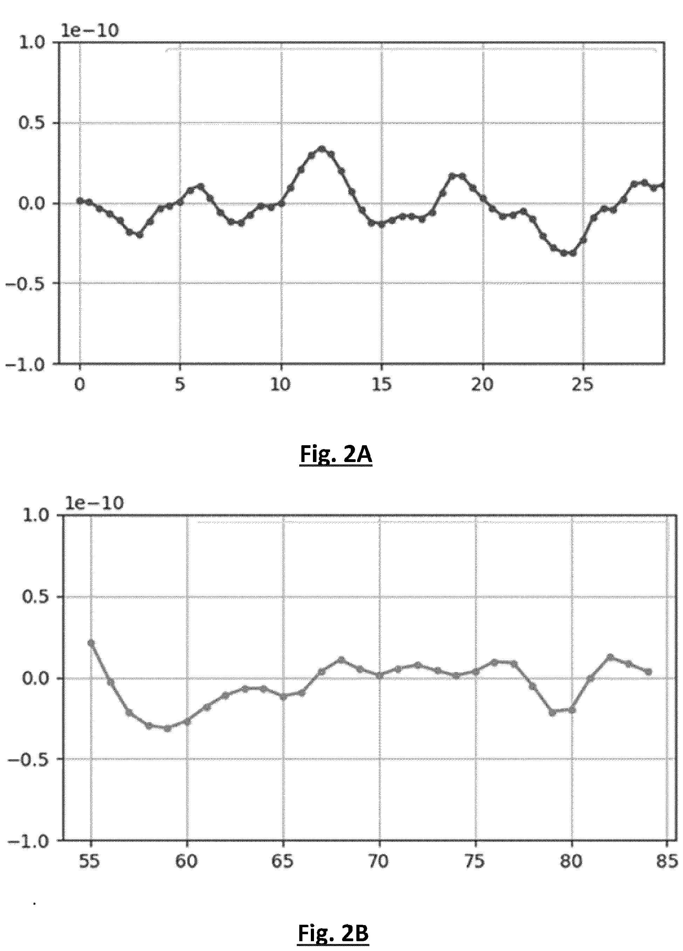

La figure 2A montre un premier signal, considéré comme un signal de référence.
La figure 2B montre un deuxième signal, destiné à être comparé au premier signal représenté sur la figure 2A.

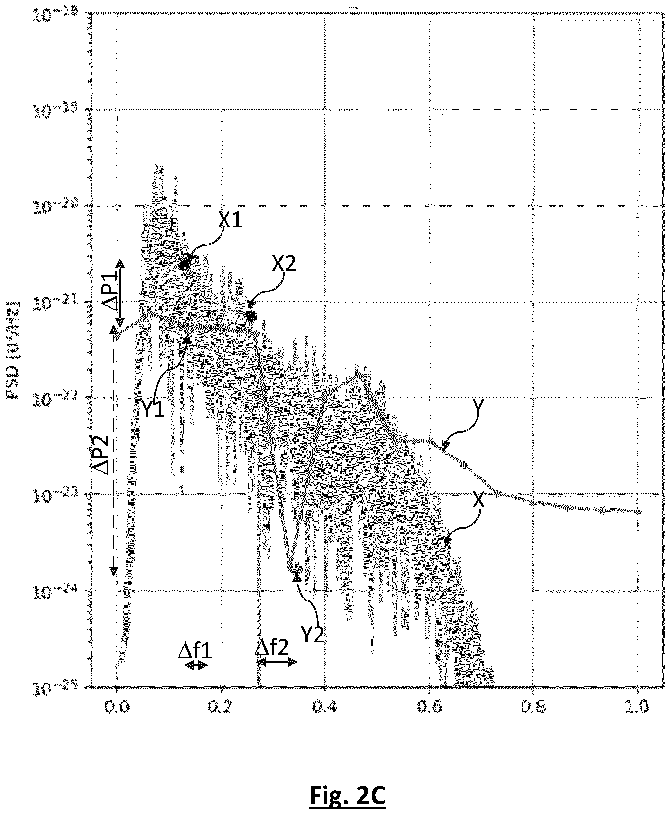

La figure 2C montre une densité de puissance spectrale en fonction d'indices fréquentiels du signal de référence, représenté sur la figure 2A, et du signal représenté sur la figure 2B.

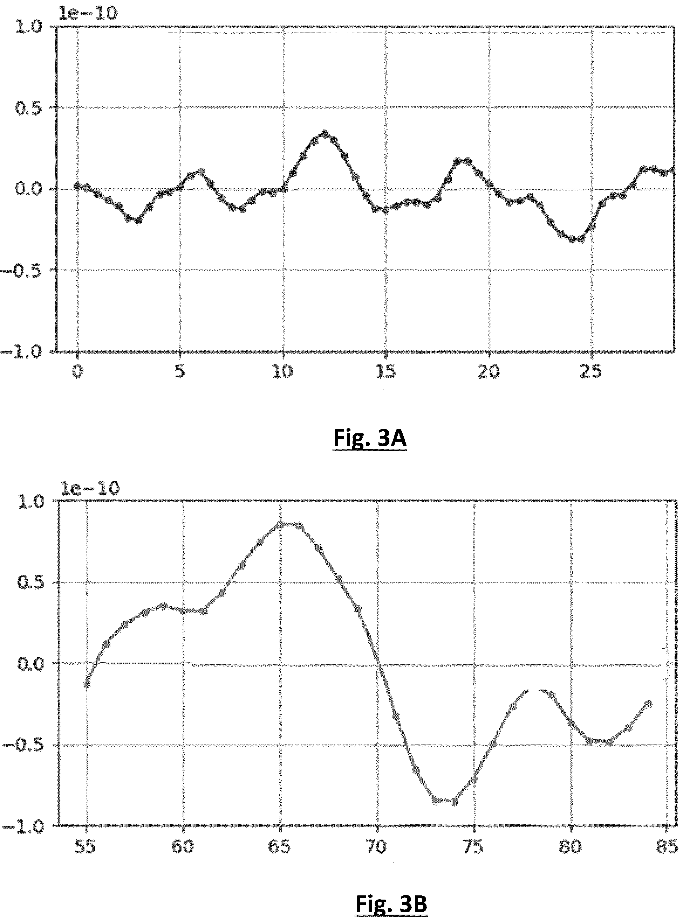

Les figures 3A à 3C montrent un deuxième exemple de mise en œuvre de l'invention.
La figure 3A montre un premier signal, considéré comme un signal de référence.

La figure 3B montre un troisième signal, destiné à être comparé au premier signal représenté sur la figure 3A.

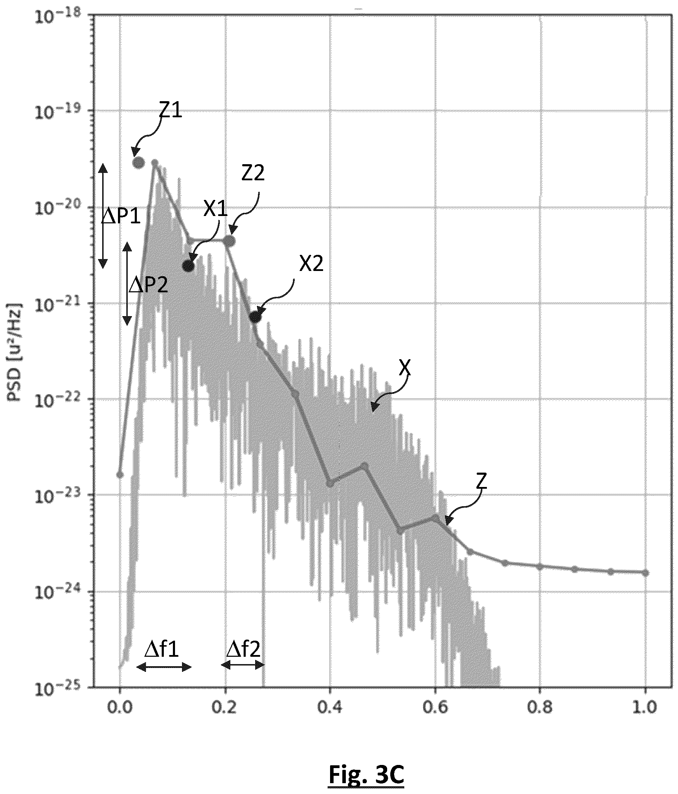

La figure 3C montre une densité de puissance spectrale en fonction d'indices fréquentiels du signal de référence, représenté sur la figure 3A, et du signal représenté sur la figure 3B.

## EXPOSE DE MODES DE REALISATION PARTICULIERS

Un objectif de la méthode selon l'invention est une comparaison d'un premier signal temporel et d'un deuxième signal temporel. Par signal temporel, on entend une série d'échantillons chronologiquement ordonnés, à chaque échantillon correspondant un instant. Le premier signal temporel peut être un signal considéré comme un signal de référence. Le premier signal temporel peut résulter d'une mesure, par exemple au moyen d'un capteur, ou d'un modèle théorique. Le premier signal temporel peut être représentatif d'un état prédéterminé, par exemple un état normal ou une anomalie, d'une situation que l'on souhaite analyser. Le deuxième signal temporel peut être un signal destiné à définir un état de la situation. La comparaison entre le premier signal temporel et le deuxième signal temporel vise à déterminer si ce dernier est représentatif de la situation correspondant au premier signal temporel.

Chaque signal temporel peut être une mesure, ou représenter une mesure, d'un capteur de type capteur optique, électrique, acoustique, magnétique, électrostatique, chimique, capteur de vitesse, d'accélération ou tout autre capteur de mouvement, capteur d'image. Ainsi, le signal temporel peut représenter une grandeur physique, chimique évoluant dans le temps.

La comparaison de signaux est mise en œuvre par une unité de traitement, de type ordinateur, comportant un microprocesseur, ou autre composant, programmé pour recevoir des instructions permettant une mise en œuvre de la méthode.

Comme décrit en lien avec l'art antérieur, des méthodes frugales de comparaison de signaux basées sur des passages par zéro ont été développés. Les principes sont les suivants :

On dispose d'un premier signal temporel x, dont les échantillons successifs sont $x(1)...x(n)....x(N_x)$ et d'un deuxième signal temporel $y(1)...y(n)....y(N_y)$. Chaque signal temporel est respectivement défini sur $N_x$ et $N_y$ instants $n$. Chaque instant $n$ est un entier tel que $1 \leq n \leq N_x$ et $1 \leq n \leq N_y$. Le premier signal temporel $x$ et le deuxième signal temporel y sont centrés. Le premier signal temporel et le deuxième signal temporel sont acquis respectivement selon une première et une deuxième fréquence d'échantillonnages $f_{s,x}$ et $t$ $f_{s,y}$.

On met ensuite en œuvre des étapes itératives, chaque étape étant associée à un rang d'itérations $k$. $k$ est un entier compris entre 1 et $K$, $K$ correspondant au nombre total d'itérations. Au cours de chaque étape itérative, on détermine un nombre de passages par zéro d'un premier signal d'itération $x^k$ et d'un deuxième signal d'itération $y^k$. Le nombre de passages par zéro peut être calculé par un produit de deux échantillons successifs de chaque signal, chaque passage par zéro correspondant à un produit négatif.

Lors de la première itération (k=1), le premier signal d'itération $x^1$ est le premier signal temporel x et le deuxième signal d'itération $y^1$ est le premier signal temporel y.

Au cours de chaque itération :

- on détermine un premier nombre de passages par zéro $D(x^k)$ du premier signal d'itération $x^k$ et un deuxième nombre de passages par zéro $D(y^k)$ du deuxième signal d'itération $y^k$.
- on normalise le premier nombre de passages par zéro $D(x^k)$ et le deuxième nombre de passages par zéro $D(y^k)$. Pour cela, chaque nombre de passages par zéro est normalisé par un terme de normalisation établi respectivement à partir du premier nombre d'échantillons $N_x$ et du deuxième nombre d'échantillons $N_y$. On obtient ainsi un premier nombre de passages par zéro normalisé $R(x^k)$ et un deuxième nombre de passage par zéro normalisé $R(y^k)$ tels que :

$$R(x^k) = \frac{D(x^k)}{N_x - 1} \,(1) \text{ et } R(y^k) = \frac{D(y^k)}{N_y - 1} \,(1'),$$

ou, de façon alternative :

$$R(x^k) = \frac{D(x^k)}{N_x - 1 - k} \,(2) \text{ et } R(y^k) = \frac{D(y^k)}{N_y - 1 - k} \,(2')$$

On calcule ensuite un premier signal différentiel $\nabla x^k$ et un deuxième signal différentiel $\nabla y^k$ tels que

$$\nabla x^k(n) = x^k(n) - x^k(n-1) \,(3) \text{ et } \nabla y^k(n) = y^k(n) - y^k(n-1) \,(3')$$

Lors de l'itération suivante : $x^{k+1} = \nabla x^k$ (4) et $y^{k+1}(n) = \nabla y^k$ (4')

On réitère ensuite les étapes décrites en lien avec les expressions (1) à (4) ainsi que (1') à (4').

Les itérations se poursuivent jusqu'à un nombre prédéterminé d'itérations $K$, avec $K \leq N\text{-}1$. Il est usuel que $K$ soit inférieur à 5, par exemple égal à 2 ou 3. K peut être égal à 1 (une seule itération). On obtient un ensemble de $K$ ratios $\{R(x^k)\}_{k=1....K}$ (5) et $\{R(y^k)\}_{k=1....K}$ (5')

Dans les publications précitées, chaque valeur $D(x^k)$ ou $R(x^k)$ peut être traduite en une pulsation, par la relation

$$w_k = \frac{\pi D(x^k)}{N} \simeq \pi R(x^k) \text{ (6)}.$$

Ainsi les valeurs $D(x^k)$ ou $R(x^k)$ sont représentatives des composantes fréquentielles des signaux analysés.

On détermine ensuite, des différences :

$$\delta(x^{k=1}) = R(x^{k=1}) \text{ lorsque k = 1 et } \delta_k(x^k) = R(x^k) - R(x^{k-1}) \text{ lorsque k > 1 (7);}$$

ainsi que :

$$\delta(y^{k=1}) = R(y^{k=1}) \text{ lorsque k = 1 ; et } \delta_k(y^k) = R(y^k) - R_{k-1}(x^k) \text{ lorsque k > 1 (7').}$$

A partir des différences ainsi calculées, on calcule un indicateur de comparaison $\psi_{xy}$ du premier signal x et du deuxième signal $y$.

$$\psi_{xy} = \sum_{k=1}^{K} \frac{\left(\delta_k(x^k) - \delta_k(y^k)\right)^2}{\delta_k(y^k)} \text{ (8)}$$

L'indicateur de comparaison $\psi_{xy}$ est confronté à un seuil, en dessous duquel on considère que les signaux $x$ et y sont comparables, au sens où le deuxième signal y peut être considéré comme représentatif du premier signal $x$.

L'indicateur de comparaison $\psi_{xy}$ est représentatif de l'art antérieur et plus précisément de la publication Kediem précédemment citée. On observe que l'indicateur de comparaison $\psi_{xy}$ dépend uniquement des fréquences dominantes de chaque signal à comparer. Cela peut s'avérer insuffisant pour comparer deux signaux, en particulier lorsque les fréquences dominantes sont proches, et lorsque les puissances spectrales respectives du premier signal et du deuxième signal, à leurs fréquences dominantes respectives, sont différentes. En outre, $\psi_{xy}$ n'est pas défini si $\delta_k(y^k) = 0$.

Un aspect important de l'invention est d'établir un indicateur de comparaison plus performant que $\psi_{xy}$, en prenant en compte non seulement l'aspect fréquentiel, mais également la puissance spectrale en une ou plusieurs fréquences des signaux comparés.

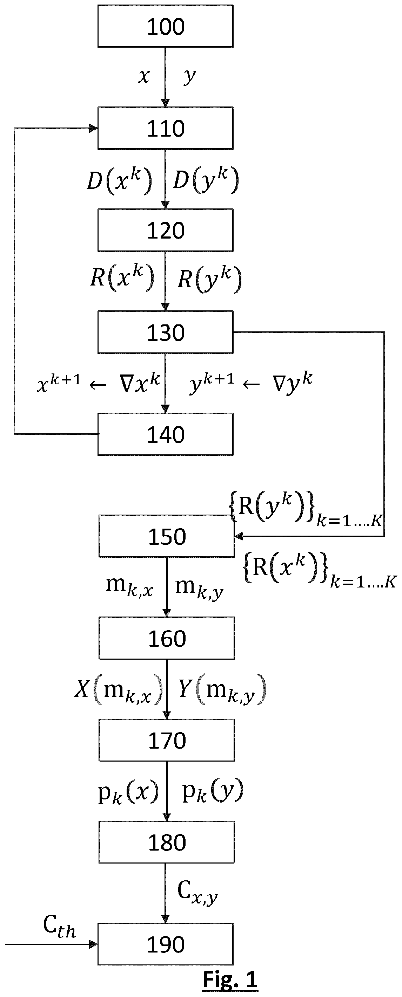

L'inventeur propose une méthode, dont les principales étapes sont schématisées sur la figure 1, et permettant de déterminer un indicateur de comparaison plus performant, comme le montrent les essais expérimentaux décrits par la suite.

Etape 100 :

Au cours de cette étape, on prend en compte deux signaux temporels $x$ et $y$, centrés. Comme précédemment décrit, le premier signal temporel $x$ est défini selon $N_x$ instants consécutifs et le deuxième signal temporel est défini $y$ selon $N_y$ instants consécutifs.

De préférence, pour chaque signal, le nombre d'instants est supérieur à 10, voire supérieur à 20 ou à 30. Le nombre d'instants correspond aux nombres d'échantillons de chaque signal pris en compte pour effectuer la comparaison.

Selon une possibilité, le premier signal temporel x est un signal à comparer avec le deuxième signal temporel $y$. $y$ peut être défini selon un nombre d'instants bien supérieurs à $x$ : $N_y > N_x$ Les étapes 110 à 140 visent à déterminer, par des étapes itératives, un nombre de passages par zéro de signaux d'itérations $x^k$ er $y^k$, comme précédemment décrit. Chaque itération est associé à un rang $k$, $k$ étant un entier compris entre 1 et $K$, $K$ désignant le nombre d'itérations. Le nombre d'itérations $K$ peut être prédéterminé, sur la base d'essais ou de modélisations. Le nombre d'itérations $K$ est compris entre 1 et $N$ - 1. N est la valeur la plus faible entre $N_x$ et $N_y$. Comme précédemment décrit, K est généralement être inférieur à 5, par exemple égal à 2 ou 3.

Etape 110 : calcul du nombre de passages par zéro du premier signal d'itération $x^k$ et du deuxième signal d'itération $y^k$.

Lors de la première itération, $x^{k=1} = x$ et $y^{k=1} = y$

Le nombre de passages par zéro du premier signal d'itération et du deuxième signal d'itération sont notés $D(x^k)$ et $D(y^k)$.

Etape 120 : Normalisation

Au cours de cette étape, chaque nombre de passages par zéro est normalisé par un terme de normalisation établi respectivement à partir du premier nombre d'échantillons $N_x$ et du deuxième nombre d'échantillons $N_y$. On obtient ainsi un premier nombre de passages par zéro normalisé $R(x^k)$ et un deuxième nombre de passage par zéro normalisé $R(y^k)$ tels qu'explicités dans (1), (1'), (2) et (2').

Etape 130 : Différenciation

Tant qu'un critère d'arrêt des itérations n'a pas été atteint, les étapes 110 et 120 sont réitérées. Dans ce cas, on calcule un signal différentiel, qui formera le signal de l'itération suivante :

$$\nabla x^k(n) = x^k(n) - x^k(n-1) \ \text{(3) et } \nabla y^k(n) = y^k(n) - y^k(n-1) \ \text{(3')}$$

Chaque signal différentiel correspond à une différence du premier signal temporel ou du deuxième signal temporel à deux instants successifs, de préférence consécutifs, ou décalés d'un décalage temporel prédéterminé, et de préférence faible, par exemple moins de 5 incréments temporels.
Le critère d'arrêt des itérations peut être un rang maximal d'itérations correspondant à une valeur limite K prédéterminée.

Etape 140 : Réitérations

Si une nouvelle itération est effectuée, le premier signal d'itération et le deuxième signal d'itération sont, pour l'itération suivante : $x^{k+1} = \nabla x^k$ (4) et $y^{k+1}(n) = \nabla y^k$ (4').
Suite aux étapes 110 à 120, éventuellement réitérées, on obtient un ensemble de ratios $\{R(x^k)\}_{k=1\dots K}$ et $\{R(y^k)\}_{k=1\dots K}$ relatifs à chaque signal temporel $x$ et $y$.

Etape 150 : définition d'indices fréquentiels

Au cours de cette étape, on définit, à partir de chaque ratio, un indice fréquentiel pour le premier signal temporel et pour le deuxième signal temporel, respectivement selon :

$$\mathrm{m}_{k,x} = round\left(\frac{R(x^k)N_x}{2}\right) \text{(10) et } \mathrm{m}_{k,y} = round\left(\frac{R(y^k)N_y}{2}\right) \ (10')$$

L'opérateur *round* désigne la partie entière.
On note qu'il y a autant de valeurs différentes d'indices fréquentiels que de nombres différents de passages par zéro déterminés au cours des étapes 110 à 140.
Etape 160 : calcul de coefficients de la transformée de Fourier de chaque signal à chaque indice fréquentiel.
Au cours de cette étape, on détermine le coefficient de la transformée de Fourier, ou de la transformée de Fourier rapide (FFT), pour chaque indice fréquentiel $\mathrm{m}_{k,x}$ et $\mathrm{m}_{k,y}$ résultant de l'étape 140.
Ainsi, relativement au premier signal temporel $x$ :

$$X\left(\mathrm{m}_{k,x}\right) = \sum_{n=0}^{N-1} e^{-2\pi j \frac{\mathrm{m}_{k,x}n}{N_x}} x(n) \ (11),$$

et relativement au deuxième signal temporel y,

$$Y\left(\mathrm{m}_{k,y}\right) = \sum_{n=0}^{N-1} e^{-2\pi j \frac{\mathrm{m}_{k,y}n}{N_y}} y(n) \ (11')$$

Dans les expressions (11) et (11'), $j^2 = -1$ et chaque valeur $2\pi\frac{\mathrm{m}_{k,x}n}{N_x}$ ou $2\pi\frac{\mathrm{m}_{k,y}n}{N_y}$ correspond à une pulsation

Chaque indice fréquentiel peut être relié à une fréquence par

$$f_{k,x} = \frac{m_{k,x}}{N_x} f_{s,x}, \text{ (12)}$$

$$f_{k,y} = \frac{m_{k,y}}{N_y} f_{s,y} \text{ (12')}$$

ou $f_{s,x}$ et $f_{s,y}$ sont respectivement les fréquences d'échantillonnage du premier signal x et la deuxième signal y précédemment définies.

Les fréquences $f_{k,x}$ et $f_{k,y}$ sont des fréquences caractéristiques de chaque signal temporel x et y. Les fréquences $f_{k=1,x}$ et $f_{k=1,y}$ résultant de la première itération sont des fréquences dominantes.

<u>Etape 170</u> : Calcul d'une puissance spectrale à chaque indice fréquentiel.

Au cours de cette étape, on détermine, à chaque indice fréquentiel $m_{k,x}$ et $m_{k,y}$, une puissance spectrale du premier signal temporel et du deuxième signal temporel, selon :

$$p_k(x) = \frac{2}{N f_{s,x}} \left| X\left(m_{k,x}\right) \right|^2 \text{ (13) et } p_k(y) = \frac{2}{N f_{s,y}} \left| Y\left(m_{k,y}\right) \right|^2 \text{ (13')}$$

La normalisation par la fréquence d'échantillonnage est optionnelle si $f_{s,x} = f_{s,y}$.

<u>Etape 180 :</u> calcul d'un indicateur de comparaison du premier signal x et du deuxième signal y, tel que

$$C_{x,y} = \frac{1}{K} \sum_{k=1}^{K} (\lambda_1 |R_k(x) - R_k(y)| + \lambda_2 |p_k(x) - p_k(y)|) \text{ (14)}$$

$\lambda_1$ et $\lambda_2$ sont des coefficients de pondération, réels positifs, prédéterminés.

D'une façon générale, l'indicateur de comparaison comporte

- une composante fréquentielle $|R_k(x) - R_k(y)|$, sous la forme d'une comparaison de nombres de passages par zéro ($D_k(x)$, $D_k(y)$) calculés lors d'une ou plusieurs itérations, de même rang, normalisés par un terme de normalisation comportant le nombre d'échantillons de chaque signal $N_k(x)$, $N_k(y)$.
- une composante de puissance spectrale, $|p_k(x) - p_k(y)|$, sous la forme d'une comparaison de puissances spectrales calculées relativement au premier signal et au deuxième signal, pour des indices fréquentiels correspondant à un même rang d'itération $k$.

Les coefficients $\lambda_1$ et $\lambda_2$ sont des coefficients de pondération, permettant de doser la prise en compte de la composante fréquentielle et de la composante de puissance dans l'indicateur de comparaison.

<u>Etape 190</u> : confrontation à un seuil

Au cours de cette étape, l'indicateur de comparaison $C_{x,y}$ est comparé à un seuil $C_{th}$, en fonction de quoi le premier signal et le deuxième signal sont considérés comme représentatifs l'un de l'autre, ou différents l'un de l'autre.

Par exemple, si $C_{x,y} \leq C_{th}$ les deux signaux x et y sont considérés comme similaires. Et si $C_{x,y} > C_{th}$, les deux signaux x et y sont considérés comme différents.

Lorsque le premier signal est considéré comme un signal de référence, représentatif d'une situation normale, si $C_{x,y} > C_{th}$, le deuxième signal y est représentatif de la survenue d'une anomalie. Le seuil $C_{th}$ est déterminé en fonction du taux de faux positifs (i-e fausses alertes) ou de faux négatifs (i-e anomalies non détectées) admis.

<u>Essais expérimentaux</u>

Les figures 2A et 2B représentent respectivement un premier signal temporel x et un deuxième signal temporel y. L'axe des abscisses correspond au temps. Le premier signal temporel x est considéré comme représentatif d'un fonctionnement normal. Le deuxième signal temporel y est également considéré comme représentatif d'un fonctionnement normal.

On a mis en œuvre le procédé décrit en lien avec les étapes 100 à 180, avec K = 2.

La figure 2C montre les densités spectrales de puissance (axe des ordonnées) en fonction de la fréquence normalisées par $f_{s,x}/2$ pour le premier signal x et par $f_{s,y}/2$ pour le deuxième signal y. Ainsi, la valeur de chaque fréquence normalisée est comprise entre 0 et 1. La courbe X correspond au premier signal x et la courbe Y correspond au deuxième signal y.

Sur la figure 2C, on a représenté :

- des points X1 et X2, dont les coordonnées sont respectivement $(\frac{2m_{k=1,x}}{N_x}, X(m_{k=1,x}))$ et $(\frac{2m_{k=2,x}}{N_x}, X(m_{k=2,x}))$ ;

- des points Y1 et Y2, dont les coordonnées sont respectivement $(\frac{2m_{k=1,y}}{N_y}, Y(m_{k=1,y}))$ et $(\frac{2m_{k=2,y}}{N_y}, Y(m_{k=2,y}))$.

Lors de la mise en œuvre du procédé, on a obtenu $C_{x,y}$ = 0.177 en prenant en compte $\lambda_1$ = 1 et $\lambda_2$ = $1.10^{20}$. Les valeurs respectives de la composante fréquentielle et de la composante de puissance spectrale et de l'indicateur de comparaison $C_{x,y}$ sont respectivement de 0.048 et 0.129.

Sur la figure 2C, on a représenté, par des doubles flèches :

- la différence Δf1 qui représente respectivement l'écart entre $\frac{2m_{k=1,x}}{N_x}$ et $\frac{2m_{k=1,y}}{N_y}$. Cela correspond à la composante fréquentielle de l'indicateur de comparaison pour les fréquences $f_{1,x}$ et $f_{1,y}$, respectivement normalisées par $f_{s,x}/2$ et $f_{s,y}/2$. Les fréquences $f_{1,x}$ et $f_{1,y}$ résultant de la première itération pour les signaux x et y. Chaque fréquence $f_{1,x}$ et $f_{1,y}$ est une fréquence dominante pour le signal x et y respectivement.

- la différence Δf2 qui représente respectivement l'écart entre $\frac{2m_{k=2,x}}{N_x}$ et $\frac{2m_{k=2,y}}{N_y}$. Cela correspond à la composante fréquentielle de l'indicateur de comparaison pour les fréquences $f_{2,x}$ et $f_{2,y}$, respectivement normalisées par $f_{s,x}/2$ et $f_{s,y}/2$.

- la différence ΔP1 qui représente l'écart entre les puissances spectrales $X(m_{k=1,x})$ et $Y(m_{k=1,y})$. Cet écart est représentatif de l'écart de puissances spectrales entre les puissances dominantes des signaux *x* et *y*.

- la différence ΔP2 qui représente l'écart entre les puissances spectrales $X(m_{k=2,x})$ et $Y(m_{k=2,y})$. Compte tenu de l'échelle logarithmique de l'axe des ordonnées, ΔP2 est très inférieur à ΔP1

.On a mis en œuvre la méthode de comparaison de l'art antérieur (cf. expression (8)), aboutissant à $\psi_{xy}$ = 0.051.

La figure 3A représente le premier signal temporel x, tel que représenté sur la figure 2A. La figure 3B représente un troisième signal temporel z, correspondant à une anomalie.

On a mis en œuvre le procédé décrit en lien avec les étapes 100 à 180, avec K = 2.

La figure 3C montre les densités spectrales de puissance (axe des ordonnées) en fonction de fréquence normalisées par la moitié de la fréquence d'échantillonnage (axe des abscisses), pour le premier signal temporel (courbe X) et pour le troisième signal temporel (courbe Z). On a représenté, sur la figure 3C :

- des points X1 et X2, dont les coordonnées sont respectivement $(\frac{2m_{k=1,x}}{N_x}, X(m_{k=1,x}))$ et $(\frac{2m_{k=2,x}}{N_x}, X(m_{k=2,x}))$

- des points Z1 et Z2, dont les coordonnées sont respectivement $(\frac{2m_{k=1,z}}{N_z}, Z(m_{k=1,z}))$ et $(\frac{2m_{k=1,x}}{N_z}, Z(m_{k=2,z}))$.

Lors de la mise en œuvre du procédé, on a obtenu $C_{x,z}$ = 1.580, avec $\lambda_1$ = 1 et $\lambda_2$ = $1.10^{20}$. Les valeurs respectives de la composante fréquentielle et de la composante de puissance spectrale et de l'indicateur de comparaison $C_{x,z}$ sont respectivement de 0.072 et 1.503.

Les valeurs des composantes fréquentielles de $C_{x,y}$ et de $C_{x,z}$ sont de 0.048 et 0.072. Les valeurs des composantes de puissance spectrale de $C_{x,y}$ et de $C_{x,z}$ sont de 0.129 et 1.503. Ainsi, l'écart entre $C_{x,y}$ et $C_{x,z}$ est essentiellement dû à la variation de la composante de puissance spectrale entre les deux indicateurs. La prise en compte de la composante de puissance spectrale dans l'indicateur de comparaison améliore la faculté de l'indicateur de comparaison à discriminer deux signaux n'étant pas représentatifs l'un de l'autre.

On a mis en œuvre la méthode de comparaison de l'art antérieur (cf. expression (7)), aboutissant à $\psi_{xz}$ = 0.086. Tandis que $\psi_{xy}$ = 0.051. L'écart relatif entre $\psi_{xy}$ et $\psi_{xz}$ et nettement plus faible que l'écart relatif entre $C_{x,y}$ et $C_{x,z}$. Cela montre que l'indicateur de comparaison, tel qu'explicité dans (14), est plus pertinent pour discriminer deux signaux différents que l'indicateur explicité dans (8), résultant de l'art antérieur.

De même que sur la figure 2C, on a représenté, sur la figure 3C :

- la différence $\Delta$f1 qui représente respectivement l'écart entre $\dfrac{2m_{k=1,x}}{N_x}$ et $\dfrac{2m_{k=1,z}}{N_z}$. Cela correspond à la composante spectrale de l'indicateur de comparaison pour les fréquences $f_{1,x}$ et $f_{1,z}$, respectivement normalisées par $f_{s,x}/2$ et $f_{s,z}/2$.

- la différence $\Delta$f2 qui représente respectivement l'écart entre $\dfrac{2m_{k=2,x}}{N_x}$ et $\dfrac{2m_{k=2,z}}{N_z}$. Cela correspond à la composante spectrale de l'indicateur de comparaison pour les fréquences $f_{2,x}$ et $f_{2,z}$, respectivement normalisées par $f_{s,x}/2$ et $f_{s,z}/2$.

- la différence $\Delta$P1 qui représente l'écart entre les puissances spectrales $X(m_{k=1,x})$ et $Z(m_{k=1,z})$. Cet écart est représentatif de l'écart de puissances spectrales entre les puissances dominantes des signaux x et z.

- la différence $\Delta$P2 qui représente l'écart entre les puissances spectrales $X(m_{k=2,x})$ et $Z(m_{k=2,z})$.

On a estimé le coût calculatoire de chaque méthode, en considérant N = 30 et K = 1. La méthode aboutissant à l'indicateur de comparaison $\psi_{xy}$ selon l'art antérieur nécessite 60 additions de 30 multiplications. La méthode selon l'invention, aboutissant à l'indicateur de comparaison $C_{x,y}$ nécessite 90 additions et 60 multiplications. Une méthode de discrimination basée sur le calcul complet de la FFT des 2 signaux nécessiterait environ 150 additions et 150 multiplications.

L'implémentation de l'invention permet de rester dans un nombre limité d'opérations mathématiques simples.

L'invention pourra être appliquée dans différents domaines, par exemple une détection d'attaque informatique, le signal temporel étant alors représentatif d'une quantité de données transitant par un nœud d'un réseau informatique. Il peut également s'agir d'une détection d'anomalie, dans des machines, suite à la mise en œuvre de capteurs de contrôle non destructif (capteur magnétique, optique, mécanique, capteurs à courant de Foucault). Il peut également s'agir d'une détection d'un comportement physiologique anormal, le signal temporel étant un signal physiologique généré par un corps humain, par exemple un capteur électrique, optique ou magnétique.

**Revendications**

**1.** Procédé de comparaison d'un premier signal temporel (x) et d'un deuxième signal temporel (y), le premier signal temporel et le deuxième signal temporel étant centrés et respectivement formés d'un premier nombre ($N_x$) et d'un deuxième nombre ($N_y$) d'échantillons consécutifs, chaque échantillon étant associé à un instant (n);

le procédé comportant les étapes itératives suivantes, chaque étape étant associée à un rang *k, k* étant un entier supérieur ou égal à 1 :

- a) détermination d'un premier nombre de passages par zéro d'un premier signal d'itération et d'un deuxième nombre de passages par zéro d'un deuxième signal d'itération, le premier signal d'itération et le deuxième signal d'itération étant respectivement:

• lors de la première itération, le premier signal temporel et le deuxième signal temporel ;
• lors de chaque itération de rang supérieur à 1, un premier signal différentiel et un deuxième signal différentiel résultant de l'itération précédente ;

- b) normalisation du premier nombre de passages par zéro et du deuxième nombre de passages par zéro résultant de l'étape a) en fonction du premier nombre d'échantillons ($N_x$), et du deuxième nombre d'échantillons ($N_y$) ;

- c) tant qu'un critère d'arrêt des itérations n'a pas été atteint, calcul d'un premier signal différentiel ($\nabla x(n)^k$) et d'un deuxième signal différentiel ($\nabla y(n)^k$) en calculant respectivement une différence du premier signal d'itération et du deuxième signal d'itération en différents couples d'instants successifs, puis réitération des étapes a) et b) ;

le procédé comportant également :

- d) détermination d'un premier indice fréquentiel ($m_{k,x}$, $m_{k,y}$) et d'un deuxième indice fréquentiel, pour au moins un même rang d'itération, en fonction des premier et deuxième nombres de passages par zéro normalisés lors de l'étape b) ;

le procédé étant **caractérisé en ce qu'**il comporte :

- e) calcul d'au moins une première et une deuxième puissance spectrale ($p_k(x)$,$p_k(y)$) respectivement du premier signal temporel et du deuxième signal temporel en chaque premier et deuxième indice fréquentiel résultant de l'étape d);
- f) calcul d'un indicateur de comparaison ($C_{x,y}$), combinant :

  • une composante fréquentielle, comportant une comparaison d'au moins un premier indice fréquentiel et d'un deuxième indice fréquentiel déterminés pour un même rang d'itération ($k$) ;
  • une composante de puissance, comportant une comparaison d'au moins une puissance spectrale calculée respectivement pour le premier signal temporel et pour le deuxième signal temporel, en au moins un premier indice fréquentiel et un deuxième indice fréquentiel déterminés pour un même rang d'itération ;

les étapes a) à f) étant mises en œuvre par une unité de traitement.

2. Procédé selon la revendication 1, dans lequel l'étape e) comporte :

- e-i) calcul de premiers et deuxièmes coefficients de Fourier ($X(m_{k,x})$, $Y(m_{k,x})$) respectivement du premier signal temporel et du deuxième signal temporel en au moins un premier et deuxième indice fréquentiel, déterminé pour un même rang d'itération ;
- e-ii) détermination de la puissance spectrale, respectivement du premier signal temporel et du deuxième signal temporel en chaque premier et deuxième indice fréquentiel, à partir des premiers et deuxièmes coefficients de Fourier déterminés lors de e-i).

3. Procédé selon l'une quelconque des revendications précédentes, dans lequel le critère d'arrêt des itérations est un nombre d'itérations prédéterminé.

4. Procédé selon la revendication 3, dans lequel le nombre d'itérations est compris entre 1 et 5.

5. Procédé selon l'une quelconque des revendications précédentes, dans lequel l'indicateur de comparaison comporte une somme pondérée de la composante fréquentielle et de la composante de puissance.

6. Procédé selon la revendication 5, dans lequel la composante fréquentielle et/ou la composante de puissance sont affectées d'un facteur de pondération ($\lambda_1$, $\lambda_2$).

7. Procédé selon l'une quelconque des revendications précédentes, dans lequel

- le premier signal est un signal de référence ;
- le deuxième signal est un signal résultant d'une mesure.

8. Procédé selon l'une quelconque des revendications précédentes, comportant une étape g) de comparaison de l'indicateur de comparaison avec un seuil ($C_{th}$), de façon qu'en fonction de la comparaison, le premier signal temporel est considéré comme similaire au deuxième signal temporel.

9. Support, configuré pour être lu par une unité de traitement, et comportant des instructions permettant un mise en œuvre des étapes a) à f) d'un procédé selon l'une quelconque des revendications précédentes.

**Fig. 1**

**Fig. 2A**

**Fig. 2B**

**Fig. 2C**

**Fig. 3A**

**Fig. 3B**

**Fig. 3C**

Europäisches
Patentamt

European
Patent Office

Office européen
des brevets

**RAPPORT DE RECHERCHE EUROPEENNE**

Numéro de la demande

EP 25 19 6573

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | KEDEM B: "SPECTRAL ANALYSIS AND DISCRIMINATION BY ZERO-CROSSINGS", PROCEEDINGS OF THE IEEE, IEEE. NEW YORK, US , vol. 74, no. 11 1 novembre 1986 (1986-11-01), pages 1477-1493, XP008046669, ISSN: 0018-9219 Extrait de l'Internet: URL:https://ieeexplore.ieee.org/stamp/stamp.jsp?tp=&arnumber=1457931 [extrait le 2025-02-16] * sections III-V * ----- | 1-9 | INV. G06F17/18 |
| A | SHENOY RAVI R ET AL: "Spectral Zero-Crossings: Localization Properties and Applications", IEEE TRANSACTIONS ON SIGNAL PROCESSING, IEEE, USA , vol. 63, no. 12 1 juin 2015 (2015-06-01), pages 3177-3190, XP011581408, ISSN: 1053-587X, DOI: 10.1109/TSP.2015.2420538 Extrait de l'Internet: URL:https://ieeexplore.ieee.org/stamp/stamp.jsp?tp=&arnumber=7080932 [extrait le 2015-05-14] * sections III et IV * ----- | 1-9 | DOMAINES TECHNIQUES RECHERCHES (IPC) G06F |

-/--

Le présent rapport a été établi pour toutes les revendications

| Lieu de la recherche | Date d'achèvement de la recherche | Examinateur |
|---|---|---|
| Berlin | 16 janvier 2026 | Virnik, Elena |

EPO FORM 1503 03.82 (P04C02)

| | Europäisches Patentamt European Patent Office Office européen des brevets | **RAPPORT DE RECHERCHE EUROPEENNE** | **Numéro de la demande** EP 25 19 6573 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | YURIN DENIS ET AL: "Applying zero-crossing method for frequency map analysis of dynamical systems", MONTHLY NOTICES OF THE ROYAL ASTRONOMICAL SOCIETY. , vol. 531, no. 1 13 mai 2024 (2024-05-13), pages 1483-1495, XP093250893, GB ISSN: 0035-8711, DOI: 10.1093/mnras/stae1216 Extrait de l'Internet: URL:https://academic.oup.com/mnras/article-pdf/531/1/1483/57842722/stae1216.pdf [extrait le 2025-02-16] * section 2 * ----- | 1-9 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Berlin | 16 janvier 2026 | Virnik, Elena |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KEDIEM B.** Spectral analysis and discrimination by zero crossings. *Proceedings of the IEEE*, 01 November 1986, vol. 74 (11)
- **SHEINKER**. Magnetic anomaly detection using high-order crossing method. *IEEE transactions on geoscience and remote sensing*, April 2012, vol. 50 (4)
- **SHENOY RAVI R. et al.** Spectral Zero Crossings : Localization Properties and Applications. *IEEE Transactions on signal processing*, 01 June 2014, vol. 3 (12)